Europäisches Patentamt

European Patent Office

Office européen des brevets

(19)

(11) Numéro de publication: **0 215 721**
**B1**

(12) # FASCICULE DE BREVET EUROPÉEN

(45) Date de publication du fascicule du brevet:
**19.04.89**

(21) Numéro de dépôt: **86440076.7**

(22) Date de dépôt: **10.09.86**

(51) Int. Cl.⁴: **F 27 D 1/16,** C 21 B 5/00,
C 21 B 13/12, C 04 B 35/68

(54) **Procédé et dispositif de réparation du garnissage réfractaire d'une conduite de gaz surchauffé par une torche à plasma.**

(30) Priorité: **20.09.85 FR 8513969**

(43) Date de publication de la demande:
**25.03.87 Bulletin 87/13**

(45) Mention de la délivrance du brevet:
**19.04.89 Bulletin 89/16**

(84) Etats contractants désignés:
**AT BE DE GB LU NL SE**

(56) Documents cité:
**BE-A-809 209**
**FR-A-1 437 713**
**GB-A-2 003 510**
**GB-A-2 121 442**
**US-A-4 072 502**

**REVUE PHYSIQUE APPLIQUEE, vol. 16, 1981, pages 425-434; M. VARDELLE et al.: "Corrélations entre les propriétés des dépôts et les conditions de fonctionnement d'une installation de projection plasma: un exemple, l'alumine γ"**

(73) Titulaire: **INSTITUT DE RECHERCHES DE LA SIDERURGIE FRANCAISE (IRSID), Voie Romaine B.P. 64, F-57210 Maizières- lès- Metz (FR)**

(72) Inventeur: **Roederer, Charles, 19, Boulevard Clémenceau, F-57000 Metz (FR)**
Inventeur: **De Lassat, Yann, 87 bis, rue Georges Ducrocq, F-57000 Metz (FR)**

(74) Mandataire: **Ventavoli, Roger, INSTITUT DE RECHERCHES DE LA SIDERURGIE FRANCAISE (IRSID) Station d'Essais Boîte Postale 64, F-57210 Maizières- lès- Metz (FR)**

EP 0 215 721 B1

## Description

L'invention concerne la réparation du garnissage réfractaire érodé de la paroi interne d'une conduite de transport de gaz surchauffé par une torche à plasma.

On sait que pour certains processus sidérurgiques le gaz destiné à être insufflé dans un four à cuve de fusion-réduction, un haut-fourneau notamment, peut être porté à haute température par une torche à plasma reçue dans un piquage latéral de la conduite, en amont de la tuyère de soufflage du vent.

Le jet de plasma rencontre la paroi opposée de la conduite et érode le garnissage réfractaire dont elle est revêtue.

Pour procéder à la réparation du garnissage érodé, il est prévu de démonter la conduite et d'effectuer un gunitage classique en atelier. Une telle pratique représente cependant des coûts importants de maintenance et perturbe sensiblement la marche du four.

Le but de l'invention est de proposer un procédé et un dispositif permettant une réparation in situ.

Ce but est atteint en mettant à profit la présence de la torche à plasma pour chauffer et projeter sur place une matière de gunitage appropriée.

Plus précisément, on répare la zone d'usure dudit garnissage réfractaire érodé par projection de matière réfractaire solide finement divisée préalablement portée, grâce à ladite torche à plasma, à une haute température apte à favoriser son adhérence sur la paroi à réparer.

En tant que de besoin, on ralentit le régime de la torche à plasma pour favoriser l'adhérence de la matière sur la paroi. Le cas échéant, on réduit également le débit de gaz dans la conduite pour favoriser la projection de la matière sur la zone de la paroi à réparer.

Selon l'invention, il est possible d'amener la matière réfractaire à projeter (avantageusement un mélange magnésiechrome), soit en amont de la torche à plasma, soit dans la torche elle-même, soit en aval de celle-ci.

L'invention a aussi pour objet une conduite de gaz à haute température comportant un garnissage intérieur réfractaire et portant une torche à plasma reçue dans un piquage latéral de ladite conduite pour surchauffer ledit gaz, caractérisée en ce que, en vue de réparer la zone d'usure du garnissage réfractaire érodée par le jet de plasma, elle comporte des moyens d'amenée d'une matière réfractaire solide finement divisée coopérant avec la torche à plasma pour chauffer et projeter ladite matière sur ladite zone d'usure.

Selon qu'il s'agit de l'un ou l'autre des trois aspects précités, les moyens d'amenée de la matière réfractaire consistent soit en une canne d'injection débouchant en aval de la torche au voisinage immédiat du jet de plasma, soit en un dispositif d'injection débouchant dans la torche elle-même, soit en un dispositif d'alimentation et de mélange avec le gaz plasmagène en amont de la torche à plasma.

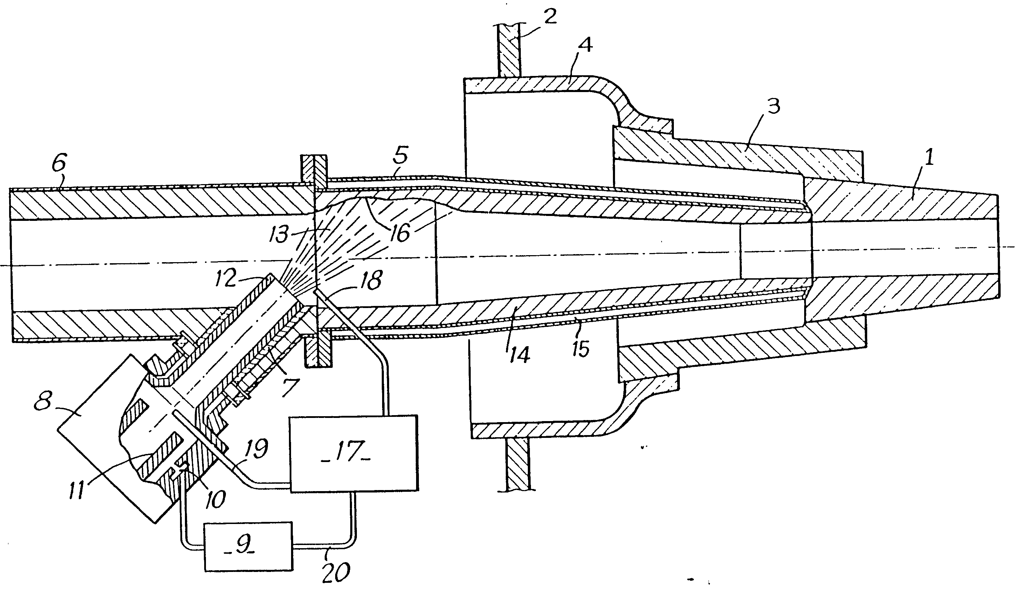

D'autres caractéristiques et avantages de l'invention ressortiront de la description suivante de trois modes de réalisation de l'invention. Il sera fait référence à la figure unique annexée, représentant en coupe longitudinale les organes de soufflage du vent dans un haut-fourneau équipé d'une torche à plasma. On a représenté sur la même figure trois implantations possibles de l'alimentation en matière réfractaire.

La tuyère à vent 1 est fixée de façon classique sur le blindage 2 du haut-fourneau par l'intermédiaire de la tympe 3 et de la chapelle 4.

Le busillon 5 est bloqué contre la tuyère 1, et conduit le vent chaud qu'il reçoit du coude porte-vent 6 et des autres organes habituels d'amenée du vent au haut-fourneau.

Le coude porte-vent 6 comporte à son extrémité de sortie un piquage latéral 7 recevant la torche à plasma 8 alimentée en gaz plasmagène par une source 9. De manière connue le gaz plasmagène pénètre dans une chambre annulaire 10 de la torche, et est transformé en plasma lors de son passage dans l'arc électrique entretenu entre les électrodes tubulaires amont 11 et aval 12.

Le plasma surchauffe le vent amené par le coude 6. L'impact du jet de plasma 13 sur la paroi du busillon 5, refroidi extérieurement par une circulation d'eau 15, finit par éroder la couche de revêtement réfractaire 14 en y créant une zone d'usure 16.

Selon l'invention, la réparation du garnissage réfractaire s'opère "in situ" en utilisant la torche à plasma elle-même pour chauffer et projeter une matière réfractaire solide finement divisée sur la zone à réparer 16.

Cette matière, véhiculée par un gaz porteur approprié, est fournie par une source d'alimentation 17.

Selon un premier mode de réalisation, elle peut être apportée en aval de la torche 8, dans le jet de plasma 13, par une canne d'injection 18 montée sur le busillon 5.

Selon un second mode de réalisation, la matière réfractaire peut être amenée dans la torche à plasma 8 elle-même par un dispositif d'introduction 19 approprié.

Selon un troisième mode de réalisation, la matière réfractaire est directement mélangée au gaz plasmagène, grâce à une conduite d'alimentation 20 reliant la source de matière 17 à la source de gaz plasmagène 9 et à un dispositif mélangeur non représenté.

## Revendications

1. Procédé de réparation du garnissage réfractaire (14) de la paroi intérieure d'une conduite (5, 6) de transport de gaz porté à haute température par une torche à plasma (8) et destiné à être insufflé dans un four à cuve de fusion-réduction, la torche à plasma (8) étant reçue dans un piquage latéral (7) de la conduite et produisant un jet de plasma érodant le garnissage, caractérisé en ce qu on répare la zone d'usure (16) dudit garnissage réfractaire par projection de matière réfractaire solide finement divisée préalablement portée, grâce à ladite torche à plasma (8), à une haute température apte à favoriser son adhérence sur la paroi à réparer.

2. Procédé selon la revendication 1, caractérisé en ce qu'on ralentit le régime de la torche à plasma (8) pour favoriser l'adhérence de la matière sur la paroi.

3. Procédé selon la revendication 2, caractérisé en ce qu'on réduit également le débit de gaz dans la conduite (5, 6) pour favoriser la projection de la matière sur la zone d'usure (16).

4. Procédé selon la revendication 1, caractérisé en ce qu'on amène la matière réfractaire à projeter en aval de la torche à plasma (8).

5. Procédé selon la revendication 1, caractérisé en ce qu'on amène la matière réfractaire à projeter dans la torche à plasma (8).

6. Procédé selon la revendication 1, caractérisé en ce qu'on amène la matière réfractaire à projeter en amont de la torche à plasma (8) avec le gaz plasmagène.

7. Conduite de transport de gaz à haute température comportant un garnissage réfractaire de sa paroi intérieure et portant une torche à plasma (8) reçue dans un piquage latéral (7) de ladite conduite (5, 6) pour surchauffer ledit gaz, caractérisée en ce que, en vue de réparer la zone d'usure (16) du garnissage réfractaire érodée par le jet de plasma (13), elle comporte des moyens (18, 19, 20) d'amenée d'une matière réfractaire solide finement divisée coopérant avec la torche à plasma (8) pour chauffer et projeter ladite matière sur ladite zone d'usure (16).

8. Conduite selon la revendication 7, caractérisée en ce que lesdits moyens consistent en une canne d'injection (18) débouchant en aval de la torche (8) au voisinage immédiat du jet de plasma (13).

9. Conduite selon la revendication 7, caractérisée en ce que lesdits moyens consistent en un dispositif d'injection (19) débouchant dans la torche à plasma (8).

10. Conduite selon la revendication 7, caractérisée en ce que lesdits moyens consistent en un dispositif d'alimentation (20) et de mélange avec le gaz plasmagène en amont de la torche à plasma (8).

**Patentansprüche**

1. Verfahren zum Reparieren einer feuerfesten Auskleidung (14) der Innenwand einer Leitung (5, 6) für die Beförderung von Gas, das durch eine Plasmafackel (8) auf hohe Temperaturen erwärmt und zum Einblasen in einen Ofen mit Schmelz-Reduktionsschacht bestimmt ist, wobei die Plasmafackel (8) von einer seitlichen Rohrabzweigung (7) der Leitung aufgenommen ist und einen Plasmastrahl erzeugt, der die Auskleidung erodiert, dadurch gekennzeichnet, daß die Verschleißzone (16) der genannten feuerfesten Auskleidung durch Aufspritzen von festem, feinteiligem feuerfesten Material repariert wird, das vorher mittels der plasmafackel (8) auf eine hohe Temperatur gebracht wird, die dazu geeignet ist, seine Haftfähigkeit auf der zu reparierenden Wand zu erhöhen.

2. Verfahren nach Anspruch 1, dadurch gekennzeichnet, daß die Betrietsbedingungen der Plasmafackel (8) verlangsamt werden, um die Haftfähigkeit des Materials auf der Wand zu erhöhen.

3. Verfahren nach Anspruch 2, dadurch gekennzeichnet, daß auch die Menge an durch die Leitung (5,6) geführtem Gas verringert wird, um das Aufspritzen des Materials auf die Verschleißzone (16) zu fördern.

4. Verfahren nach Anspruch 1, dadurch gekennzeichnet, daß das aufzuspritzende feuerfeste Material stromabwärts von der Plasmafackel (8) zugeführt wird.

5. Verfahren nach Anspruch 1, dadurch gekennzeichnet, daß das aufzuspritzende feuerfeste Material in der Plasmafackel (8) zugeführt wird.

6. Verfahren nach Anspruch 1, dadurch gekennzeichnet, daß das aufzuspritzende feuerfeste Material stromaufwärts von der Plasmafackel (8) mit dem plasmagenen Gas zugeführt wird.

7. Leitung zur Beförderung von Gas mit hohen Temperaturen umfassend eine feuerfeste Auskleidung ihrer Innenwand und eine plasmafackel (8) tragend, die in einer Rohrabzweigung (7) der genannten Leitung (5, 6) vorgesehen ist, um das genannte Gas zu überhitzen, dadurch gekennzeichnet, daß sie angesichts der Reparatur der Verschleißzone (16) der vom Plasmastrahl (13) erodierten feuerfesten Auskleidung Einrichtungen (18, 19, 20) für die Zufuhr eines festen, feinteiligen feuerfesten Materials aufweist, die mit der Plasmafackel (8) zusammenwirken, um das genannte Material zu erwärmen und auf die genannte Verschleißzone (16) aufzuspritzen.

8. Leitung nach Anspruch 7, dadurch gekennzeichnet, daß die genannten Einrichtungen aus einem Einspritzrohr (18) bestehen, das stromabwärts von der Plasmafackel (8) in unmittelbarer Nähe des Plasmastrahls (13) mündet.

9. Leitung nach Anspruch 7, dadurch gekennzeichnet, daß die genannten Einrichtungen aus einer Einspritzvorrichtung (13) bestehen, die in die Plasmafackel (8) mündet.

10. Leitung nach Anspruch 7, dadurch gekennzeichnet, daß die genannten Einrichtungen aus einer Vorrichtung (20) zum Zuführen und Mischen mit dem plasmagenen Gas stromafwärts von der Plasmafackel (8) bestehen.

**Claims**

1. Process for repairing the refractory lining (14) of the inner wall of a conduit (5, 6) for conveying gas heated to a high temperature by a plasma torch (8) and intended to be injected into a melting-reduction tank furnace, the plasma torch (8) being received in a side fitting (7) of the conduit and producing a plasma jet eroding the lining, characterized in that the area of wear (16) of the said refractory lining is repaired by spraying finely divided solid refractory material preheated, by virtue of the said plasma torch (8), to a high temperature capable of promoting its adhesion to the wall to be repaired.

2. Process according to Claim 1, characterized in that the operation of the plasma torch (8) is slowed down to promote the adhesion of the material to the wall.

3. Process according to Claim 2, characterized in that the flow rate of gas in the conduit (5, 6) is also reduced to promote the spraying of the material onto the area of wear (16).

4. Process according to Claim 1, characterized in that the refractory material to be sprayed is delivered downstream of the plasma torch (8).

5. Process according to Claim 1, characterized in that the refractory material to be sprayed is delivered into the plasma torch (8).

6. Process according to Claim 1, characterized in that the refractory material to be sprayed is delivered upstream of the plasma torch (8) with the gas used to generate the plasma.

7. Conduit for conveying gas at high temperature comprising a refractory lining of its inner wall and carrying a plasma torch (8) received in a side fitting (7) of the said conduit (5, 6) for superheating the said gas, characterized in that, in order to repair the area of wear (16) of the refractory lining, eroded by the plasma jet (13), it comprises means (18, 19, 20) for delivering a finely divided solid refractory material interacting with the plasma torch (8) to heat and spray the said material onto the said area of wear (16).

8. Conduit according to Claim 7, characterized in that the said means consist of an injection probe (18) emerging downstream of the torch (8) in the immediate vicinity of the plasma jet (13).

9. Conduit according to Claim 7, characterized in that the said means consist of an injection device (19) emerging into the plasma torch (8).

10. Conduit according to Claim 7, characterized in that the said means consist of a device for feeding (20) and mixing with the gas used to generate the plasma, upstream of the plasma torch (8).